# EUROPEAN PATENT SPECIFICATION

(11) **EP 3 882 010 B1**
(45) Date of publication and mention of the grant of the patent: **11.09.2024**
(21) Application number: 19885994.4
(22) Date of filing: 13.11.2019
(51) Int. Cl.: B29K 21/00, B29K 23/00, B29K 75/00, B32B 3/30, B29C 59/04, B29C 48/21, B32B 27/20, B32B 27/08, B32B 7/12, B29L 31/34, B29C 51/16, B29C 51/10, B29C 51/14, B29C 35/08, B29C 59/02, B29K 305/00, B29L 9/00, B32B 27/22, B32B 27/30, B32B 27/40

(54) **THERMOPLASTIC RESIN SHEET HAVING HAIR-LIKE BODIES, AND MOLDED ARTICLE THEREOF**
THERMOPLASTISCHE HARZFOLIE MIT HAARÄHNLICHEN KÖRPERN UND FORMKÖRPER DARAUS
FEUILLE DE RÉSINE THERMOPLASTIQUE COMPORTANT DES CORPS EN FORME DE POILS ET ARTICLE MOULÉ CORRESPONDANT

(30) Priority: 16.11.2018 JP 2018215926
(43) Date of publication of application: 22.09.2021
(73) Proprietor: Denka Company Limited, Tokyo 103-8338 (JP)
(72) Inventor: MAEDA, Keishi, Isesaki-shi, Gunma 372-0855 (JP); TOYAMA, Hiroko, Isesaki-shi, Gunma 372-0855 (JP)
(74) Representative: Kraus & Lederer PartGmbB
(86) International application number: PCT/JP2019/044493
(87) International publication number: WO 2020/100930

(56) References cited:
- WO-A1-2018/016562
- WO-A1-2018/016562
- WO-A1-2019/049897
- WO-A1-2019/049897
- JP-A- 2003 136 618
- JP-A- 2003 136 618
- JP-A- 2004 115 972
- JP-A- 2004 115 972

## Description

### TECHNICAL FIELD

The present invention pertains to a thermoplastic resin sheet having hair-like bodies and a molded article thereof.

### BACKGROUND ART

Conventionally, sheets of paper and polymer materials are used as interior materials of automobiles and the housings of associated components, housings of electronic devices and appliances, building materials such as wallpaper, housings for toys and game consoles, and members of daily necessities. Further, as a method to provide a good tactile sensation to a surface of a sheet, Patent Document 1, for example, presents a resin sheet having hair-like bodies arranged regularly on a surface thereof.

Meanwhile, for example, the surface quality of automobile interior equipment, such as dashboards and seats, is said to be one important factor in increasing sensibility values, such as the comfort and satisfaction of drivers and crew, in the cabin space, and the provision of a resin sheet having a good surface quality is desired.

Patent Document 1: WO 2018/016562 A

### SUMMARY OF INVENTION

### TECHNICAL PROBLEM

The objective of the present invention is to provide a resin sheet having good tactile sensation and surface quality, and a molded article thereof.

### SOLUTION TO PROBLEM

That is, as a result of investigating various means, the present inventors found that by adjusting the shape of hair-like bodies within a certain range, brightness and gloss are no higher than a certain level and a good tactile sensation is also maintained, and thus a good surface quality is expressed, leading to the completion of the present invention.

The present invention, which solves the above problem, is configured as follows.
(1) A thermoplastic resin sheet having hair-like bodies arranged regularly on at least one surface of a base layer, a continuous phase being formed without a structural boundary between the base layer and the hair-like bodies, wherein the hair-like bodies have an average height of 30 µm or more and 200 µm or less, the surface having the hair-like bodies has an L* value of 15 or less in an L*a*b* color system based on color difference measurement (JIS Z 8729), and the surface having the hair-like bodies has a 60-degree specular gloss (JIS Z 8741) of 0.2% or less, wherein the hair-like bodies have an average height (h) to average length ratio of 0.9 or more and 1.0 or less, and the base layer and the hair-like bodies contain the same resin composition having a thermoplastic resin as a main component, and the resin composition includes a colorant characterized in that the resin sheet has a dark color in which the brightness is 80% or less in the HSV model, in accordance with claim 1.
(2) The resin sheet according to (1), wherein the hair-like bodies have an average diameter of 1 µm or more and 50 µm or less and the hair-like bodies have an average spacing of 20 µm or more and 200 µm or less.
(3) The resin sheet according to (1) or (2), wherein the thermoplastic resin contains an olefin-based resin.
(4) The resin sheet according to (1) or (2), wherein the thermoplastic resin contains a urethane-based elastomer.
(5) The resin sheet according to any one of (1) to (4), wherein the resin sheet is a multilayer resin sheet.
(6) A molded article formed using the resin sheet according to any one of (1) to (5).
(7) The molded article according to (6), wherein the molded article is vacuum-pressure molded on a surface of an automobile interior member, an electronic device, an electronic device cladding, a cosmetic container, or a container member.

### EFFECTS OF INVENTION

According to the present invention, a sheet having good tactile sensation and surface quality, and a molded article thereof can be provided.

### BRIEF DESCRIPTION OF DRAWINGS

FIG. 1 is a schematic vertical side cross-sectional view showing a resin sheet according to a first embodiment of the present invention.

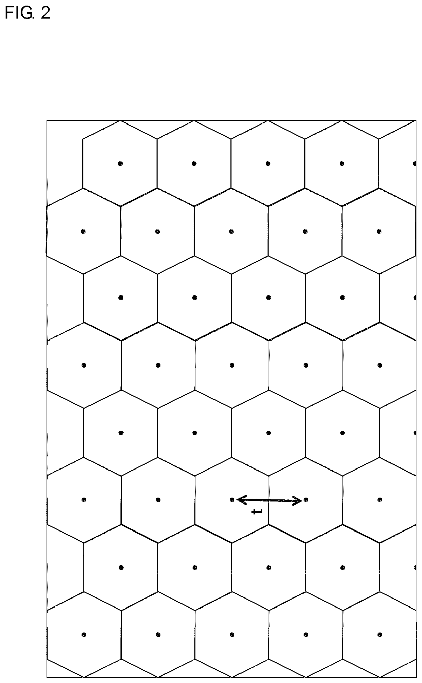

FIG. 2 is a schematic plan view of the resin sheet of FIG. 1.
FIG. 3 is a schematic vertical side cross-sectional view showing the layer structure of a resin sheet according to a second embodiment of the present invention.
FIG. 4 is a schematic vertical side cross-sectional view showing the layer structure of a resin sheet according to a third embodiment of the present invention.

### DESCRIPTION OF EMBODIMENTS

Below, various embodiments of the resin sheet shall be explained, followed by an explanation of the method for manufacturing the resin sheet, but in cases in which the specific explanation of one embodiment described herein applies to another embodiment, the corresponding explanation for the other embodiment shall be omitted.

### First Embodiment

A resin sheet according to a first embodiment of the present invention is a thermoplastic resin sheet as defined in claim 1 having hair-like bodies arranged regularly on at least one surface of a base layer, a continuous phase being formed without a structural boundary between the base layer and the hair-like bodies, wherein the hair-like bodies have an average height of 30 µm or more and 200 µm or less, the surface having the hair-like bodies has an L* value of 15 or less in an L*a*b* color system based on color difference measurement (JIS Z 8729), and the surface having the hairlike bodies has a 60-degree specular gloss (JIS Z 8741) of 0.2% or less.

### <Base Layer>

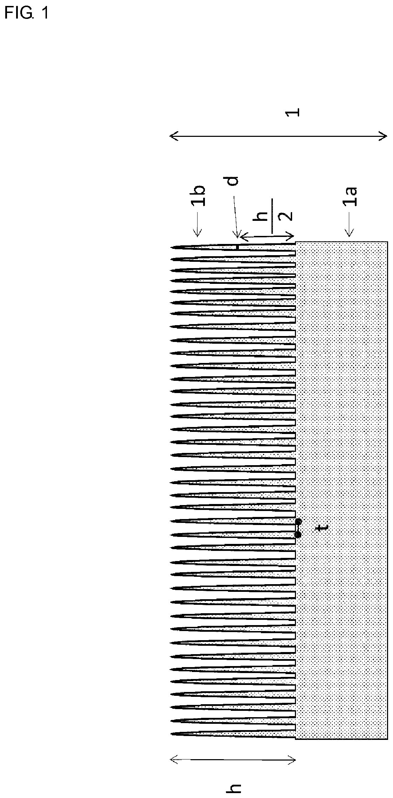

A base layer (1a), as shown in FIG. 1, is a layer forming a base for hair-like bodies and refers to the portion of the surface, denoted by reference sign 1, other than the hair-like bodies 1b. The thickness of the base layer refers to the thickness from the roots of the hair-like bodies to the surface on the opposite side of the base layer. It is preferable that the average thickness of the base layer is 15-1000 µm and more preferably, 150-800 µm. By setting the thickness to 15 µm or more, the height of the hair-like bodies can be sufficiently expressed. Further, by setting the thickness to 1000 µm or less, the hair-like bodies can be formed efficiently. A continuous phase is formed without a structural boundary between the base layer and the hair-like bodies. The absence of a structural boundary means that the base layer and the hair-like bodies are integrally formed and that there is no structurally clear border section therebetween. Further, forming a continuous phase means a state in which there are no seams between the base layer and the hair-like bodies and no discontinuities (a continuous phase is formed). This feature differs from a structure in which hair-like bodies are transplanted to a base layer. The base layer and the hair-like bodies have the same composition and the bonds between the base layer and the hair-like bodies may include covalent bonds. A covalent bond refers to a chemical bond formed by an electron pair being shared by two atoms, and in thermoplastic resins which are chain molecules in which the monomers are connected, each polymer is bonded by covalent bonds and is bonded more strongly than by the van der Waals bonds or hydrogen bonds acting between the polymer molecules.

Further, the base layer and the hair-like bodies may be derived not from separate, but from the same solid thermoplastic resin sheet. Derived from the same solid thermoplastic resin sheet means, for example, the hair-like bodies and the base layer being obtained, directly or indirectly, based on the same solid resin sheet.

Further, the base layer and the hair-like bodies may be formed from the same solid thermoplastic resin sheet. Formed from the same solid thermoplastic resin sheet means that the hair-like bodies and the base layer are directly formed by processing a single resin sheet.

By forming a continuous phase without a structural boundary between the base layer and the hair-like bodies, the hair-like bodies separating from the base layer due to an external stimulus is suppressed and a sheet having a good tactile sensation is achieved. Further, manufacturing with fewer steps than when transplanting hair-like bodies becomes possible.

The base layer and the hair-like bodies contain the same resin composition having a thermoplastic resin as a main component. Having a thermoplastic resin as a main component means containing 50 mass% or more, 60 mass% or more, 70 mass% or more, 80 mass% or more, or 90 mass% or more of a thermoplastic resin. As the thermoplastic resin, a resin containing at least one of a styrene-based resin, an olefin-based resin, a polyvinylchloride resin, a thermoplastic elastomer, or a fluorine-based resin can be used.

Styrene-based monomers such as styrene, *α*-methylstyrene, *p*-methylstyrene, dimethylstyrene, *p*-*t*-butylstyrene, or chlorostyrene alone or copolymers thereof, copolymers of such a styrene-based monomer and another monomer, for example, a styrene-styrene copolymer (SE resin), a styrene-acrylonitrile copolymer (AS resin), or copolymers of the styrene-based monomer and yet another polymer, for example, a graft polymer graft polymerized in the presence of a diene-based rubber-like polymer such as polybutadiene, a styrene-butadiene copolymer, polyisoprene, or polychloroprene, for example, a polystyrene such as high-impact polystyrene (HIPS resin) or a styrene-acrylonitrile graft polymer (ABS resin) can be used as the styrene-based resin. Further, a styrene-based thermoplastic elastomer can also be used.

A polyolefin-based resin means a resin containing a polymer containing *α*-olefin as a monomer and includes polyethylene-based resins and polypropylene-based resins. As a polyethylene (PE) resin, it is possible to use a high-density polyethylene, a low-density polyethylene, a linear low-density polyethylene, a linear intermediate-density polyethylene, etc., , not only alone but also as a copolymer such as an ethylene-vinyl acetate copolymer, an ethylene-acrylic acid copolymer, an ethylene-acrylic acid ester copolymer, an ethylene methacrylic acid ester copolymer, an ethylene-vinyl acetate-vinyl chloride copolymer, etc. Considering the cross-linkability by electron beam irradiation, it is preferable that a linear low-density polyethylene or a linear intermediate-density polyethylene is used.

Further, a homopolypropylene, a random polypropylene, a block polypropylene, etc. can be used as a polypropylene (PP) resin. When a homopolypropylene is used, the structure of the homopolypropylene may be any of isotactic, atactic, or syndiotactic. When a random polypropylene is used, a substance preferably having 2-20 carbon atoms and more preferably having 4-12 carbon atoms, for example, ethylene, 1-butene, 1-pentene, 1-hexene, 1-heptene, 1-octene, 1-nonene, or 1-decene can be used as the α-olefin to be copolymerized with propylene. When a block polypropylene is used, a block copolymer (block polypropylene), a block copolymer containing a rubber component, a graft copolymer, etc. can be used. These olefin resins can be used alone and can also be used in combination with other olefin-based resins.

Considering the cross-linkability by electron beam irradiation, it is preferable that a random polypropylene or a block polypropylene is used.

A vinyl chloride homopolymer or a copolymer of vinyl chloride and another comonomer can be used as the polyvinyl chloride. When the polyvinyl chloride is a copolymer, the polyvinyl chloride may be a random copolymer or may be a graft copolymer. One example of a graft copolymer is a copolymer in which, for example, an ethylene-vinyl acetate copolymer or a thermoplastic urethane polymer is used as the backbone polymer and vinyl chloride is graft polymerized thereto. The polyvinyl chloride of the present embodiment is a composition demonstrating an extrusion-moldable soft polyvinyl chloride and containing an additive such as a polymer plasticizer. A publicly known polymer plasticizer can be used as the polymer plasticizer, but, for example, an ethylene copolymer polymer plasticizer such as an ethylene-vinyl acetate-carbon monoxide copolymer, an ethylene-(meth)acrylic acid ester-carbon monoxide copolymer, or an ethylene-vinyl acetate copolymer with a high vinyl acetate content can be raised as a preferred example.

The thermoplastic elastomer includes elastomers having a structure in which a soft polymer substance and a hard polymer substance are combined. Specific examples include styrene-based elastomers, olefin-based elastomers, vinyl chloride-based elastomers, polyester-based elastomers, polyamide-based elastomers, polyurethane-based elastomers, etc. Regarding polyurethane-based elastomers, as a combination of an isocyanate and a polyol, which are raw materials, any combination of an MDI-based, an H₁₂ MDI-based, or an HDI-based isocyanate and a polyether-based, a polyester-based, or a polycarbonate-based polyol may be selected or a plurality thereof may be combined. These elastomers can be selected from among those generally commercially available and used.

A vinylidene fluoride homopolymer and a vinylidene fluoride copolymer having vinylidene fluoride as a main component can be used as the fluorine-based resin. Polyvinylidene fluoride (PVDF) resins are crystalline resins exhibiting various crystal structures such as α-type, β-type, γ-type, and αp-type, but as the vinylidene fluoride copolymer, examples include vinylidene fluoride-hexafluoropropylene copolymers, vinylidene fluoride-tetrafluoroethylene copolymers, vinylidene fluoride-chlorotrifluoroethylene copolymers, vinylidene fluoride-trifluoroethylene copolymers, vinylidene fluoride-tetrafluoroethylene-hexafluoropropylene three-component copolymers, vinylidene fluoride-chlorotrifluoroethylene-hexafluoropropylene three-component copolymers, and mixtures of two or more thereof.

It is preferable that the melt mass flow rate of the thermoplastic resin is 1 g/10 min. or more at 190°C to 300°C. By setting the rate to 1 g/10 min. or more, the transferability of the shape of the hair-like bodies can be improved. The melt mass flow rate is a value measured according to JIS K 7210 under conditions for any of the loads (2.16 kg to 10.0 kg) at any of the test temperatures from 190°C to 300°C.

The abovementioned thermoplastic resin composition may be alloyed with the abovementioned thermoplastic resin at any ratio so long as the effects of the present invention, especially the formation of the hair-like bodies, are not inhibited. For example, if polyethylene and a styrene-based thermoplastic elastomer are alloyed, it is preferable that polyethylene is included at 50 mass% or more with respect to 100 mass% of the resin composition. Furthermore, other additives may also be included, with the proviso that the resin composition includes a colorant. As the other additives, so long as the effects of the present invention are not inhibited, a colorant such as a pigment or a dye is used and as further additives a water repellent, an oil repellent, a lubricating material/mold release agent such as silicone oil or an alkyl ester-based agent, a fibrous reinforcing agent such as glass fiber, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, an ultraviolet light absorber, a flame retardant, an anti-bacterial agent, an anti-viral agent, or a heat stabilizer can be added. Further, scrap resin generated in the resin sheet manufacturing process can be mixed and used.

Examples of the colorant include masterbatches, colored pellets, dry colors, paste colors, liquid colors, inks, etc., and coloring may be performed by kneading with a resin in an extruder or by printing/applying onto a surface of the hair-like bodies. Among these, a method of coloring by kneading a masterbatch with a resin in an extruder is suitable. Examples of the coloring material used in the colorant include carbon black, inorganic pigments, organic pigments, basic dyes, acidic dyes, etc., and among these, carbon black is suitably used. As the final colorant content, the amount of colorant added is preferably 0.01 mass% to 5 mass%, more preferably 0.02 mass% to 3 mass%, and yet more preferably 0.05 mass% to 2 mass%. By setting the amount to 0.01 mass% or more, the risk of insufficient coloring can be reduced, and by setting the amount to 5 mass% or less, the risk of the material becoming brittle and not being able to form hair-like bodies uniformly can be reduced.

The color of the resin sheet of the present invention satisfies gloss and brightness no higher than the above specified level and is a dark color in which the brightness is 80% or less in the HSV model.

Examples of the water repellent/oil repellent include silicone-based water repellents, carnauba wax, and fluorine-based water/oil repellents. Examples of the silicone include organopolysiloxane, dimethylpolysiloxane, methylphenylpolysiloxane, methylhydrogenpolysiloxane, etc. and among these, dimethylpolysiloxane is suitably used. Examples of commercial products include "Clinbell CB50-PP", "Clinbell CB-30PE", "Clinbell CB-1", "Clinbell CB-50AB" (manufactured by Fuji Chemical Industries, Ltd.), etc. in which a silicone is alloyed with a resin. Examples of the carnauba wax include, as commercially available products, "Carnauba No. 1" (manufactured by NIKKO RICA CORPORATION), etc. Examples of the fluorine-based water/oil repellents include surfactants having a perfluoroalkyl group and also include, as commercially available products, "Surflon KT-PA" (manufactured by AGC SEIMI CHEMICAL CO., LTD.), etc. The amount of the water/oil repellent added is preferably 0.5 mass% to 25 mass%. At less than 0.5 mass%, there is a risk of not being able to obtain sufficient water/oil repelling effects, and at greater than 25 mass%, there is a risk of poor moldability.

Examples of the anti-static agent include polyether ester amide-based high molecular weight type anti-static agents, ionomer-based high molecular weight type anti-static agents, etc. Examples of the polyether ester amide-based high molecular weight type anti-static agent include, as commercially available products, "Pelestat 230", "Pelestat 6500", "Pelectron AS", "Pelectron HS" (manufactured by Sanyo Chemical Industries, Ltd.), etc. Examples of the ionomer-based high molecular weight type anti-static agent include, as commercially available products, "Entire SD100", "Entire MK400" (manufactured by DU PONT-MITSUI POLYCHEMICALS), etc. The amount of the anti-static agent added is preferably 5 mass% to 30 mass%. At less than 5 mass%, there is a risk of not being able to obtain sufficient anti-static properties, and at greater than 30 mass%, the production costs increase.

As the anti-bacterial agent, either an inorganic or organic antibacterial agent may be added. Considering dispersibility, inorganic agents are preferable. Specific examples include metal ion (Ag, Zn, Cu) inorganic anti-bacterial agents, calcined shell calcium-based anti-bacterial agents, etc. Examples of commercially available metal ion inorganic anti-bacterial agents include "Bactekiller BM102VT" (manufactured by Fuji Chemical Industries, Ltd.), "Novaron VZF200", "Novaron (AG300)" (manufactured by TOAGOSEI CO., LTD.), "KM-10D-G", "IM-10D-L" (manufactured by Sinanen Zeomic Co., Ltd.), etc. Examples of the calcined shell calcium-based anti-bacterial agents include "Scallow" (manufactured by FID, Ltd.), etc. The amount of the anti-bacterial agent added is preferably 0.5 mass% to 5 mass%. At less than 0.5 mass%, there is a risk of not being able to obtain sufficient anti-bacterial properties, and at greater than 5 mass%, the production costs increase.

As the ultraviolet light absorber, an inorganic or organic ultraviolet light absorber can be used.

As the inorganic ultraviolet light absorber, for example, titanium oxide, zinc oxide, cesium oxide, iron oxide, and many other types of inorganic ultraviolet light absorbers can be used. Among these, zinc oxide is particularly superior and preferable in terms of transparency and ultraviolet impermeability. As commercially available products, for example, the triazine-based ultraviolet light absorber "TINUVIN 1600" (manufactured by BASF), etc. can be used.

When an inorganic ultraviolet light absorber is used, the amount added is preferably 1-5 parts by mass with respect to a total of 100 parts by mass of the resin composition. When the amount added is less than 1 part by mass, the effect of suppressing ultraviolet light-induced sheet deterioration may be reduced, and when the amount is greater than 5 parts by mass, the production costs increase.

Moreover, it is also possible to use a masterbatch, etc., in which an inorganic ultraviolet light absorber is alloyed in advance with a thermoplastic resin. Examples of commercially available masterbatches with a urethane-based thermoplastic elastomer base include "Weather Resistant Master UNS (Polyester-Based) (manufactured by FCI Co., Ltd.) and "Weather Resistant Master UNE (Polyether-Based)" (manufactured by FCI Co., Ltd.), and considering production efficiency, it is preferred that a masterbatch is used. The amount of masterbatch added is preferably 1-5 parts by mass with respect to 100 parts by mass of the resin composition.

Moreover, as the organic ultraviolet light absorber, for example, triazine-based, benzotriazole-based, oxalic acid-based, benzophenone-based, hindered amine-based, and many other types of organic ultraviolet light absorbers can be used. Preferably, a high molecular weight type ultraviolet light absorber with a molecular weight of 300 or more is suitably used in order to minimize volatilization during manufacturing or use of the film.

When an organic ultraviolet light absorber is used, the amount added is preferably 4 parts by mass or more with respect to a total of 100 parts by mass of the resin composition. When the content is less than 4 part by mass, the effect of suppressing ultraviolet light-induced sheet deterioration may be reduced. Meanwhile, even at greater than 8 parts by mass, not only will the effect of suppressing ultraviolet light-induced sheet deterioration level off but the costs will also be unpreferable.

As the lubricating material/mold release agent, an alkyl-based mold release agent such as an aliphatic hydrocarbon-based compound, a higher fatty acid-based compound, a higher aliphatic alcohol-based compound, a fatty acid amide-based compound, a silicone-based mold release agent, a fluorine-based mold release agent, etc. can be used. When a mold release agent is used, the amount added is preferably 0.01-5 parts by mass, more preferably 0.05-3 parts by mass, and yet more preferably 0.1-2 parts by mass, of a total of 100 parts by mass with the resin composition. When the amount added is less than 0.01 parts by mass, there is a risk of the mold releasing effect becoming low, and when the amount added is greater than 5 parts by mass, there is a risk of bleed-out on the sheet surface.

Moreover, it is also possible to use a masterbatch, etc., in which a lubricating material/mold release agent is alloyed in advance with a thermoplastic resin. Examples of commercially available masterbatches with a urethane-based thermoplastic elastomer base include "Waxmaster V" (manufactured by FCI Co., Ltd.), and considering production efficiency, it is preferred that a masterbatch is used. The amount of masterbatch added is preferably 1-8 parts by mass, more preferably 2-7 parts by mass, and yet more preferably 3-6 parts by mass of a total of 100 parts by mass with the resin composition.

### <Hair-like Bodies>

Hair-like bodies (1b) refer to a portion extending hair-like from the surface of the base layer (1a), as shown in FIG. 1. The hair-like bodies are arranged regularly on the surface of the base layer. Here, arranged regularly means a state in which the hair-like bodies are not arranged randomly, that is, a state arranged in an orderly fashion in one direction or in two directions. Whether or not the arrangement of the hair-like bodies is regular is determined based on the state of arrangement of the roots of the hair-like bodies. In certain embodiments, the hair-like bodies are positioned on the base layer at a predetermined spacing and the positions of the bottom surfaces of the hair-like bodies are arranged in an orderly fashion in the longitudinal direction and the transverse direction of the base layer. Further, the form of arrangement of the hair-like bodies is not particularly limited and a vertically and horizontally arranged grid arrangement, a staggered arrangement, etc. can be selected. Due to the hair-like bodies being arranged regularly on the surface of the base layer, a good tactile sensation is readily expressed, uniformly and without irregularities. Falling of the hair-like bodies occurs due to the application of a load such as, for example, tracing with a finger and finger marks in which the gloss and color tone differ from those of the surrounding portion can be formed. Further, due to the hair-like bodies, the tactile sensation can become like that of a suede-like napped sheet.

The average height (h) of the hair-like bodies is 30-200 µm. By setting the average height to 30 µm or more, a good tactile sensation can be sufficiently ensured, and by setting the average height to 200 µm or less, the risk of the height to length ratio of the hair-like bodies becoming no higher than a certain level can be reduced, and brightness can be made no higher than a certain level.

When the hair-like bodies stand roughly straight with respect to the base layer, the length of the hair-like bodies represents the height of the hair-like bodies. Meanwhile, when the hair-like bodies are slanted with respect to the base layer or when the hair-like bodies have a portion that curls, the distance from the surface of the base layer at the location of the hair-like bodies most removed from the surface of the base layer is made the height h of the hair-like bodies. Moreover, the total value of the spacing from the tip to a central portion of the root of the hair-like bodies, subdivided by multi-point measurement, is made the length L of the hair-like bodies.

The height of the hair-like bodies and the length of the hair-like bodies are measured, using an electron microscope and image processing software, at a number of arbitrary locations on the resin sheet and arithmetic mean values of the measurements can be used as the average height of the hairlike bodies and the average length of the hair-like bodies.

The average height to average length ratio of the hair-like bodies is 0.9 or more and 1.0 or less, preferably 0.93 or more and 1.0 or less, and more preferably 0.95 or more and 1.0 or less. By setting the average height to average length ratio to 0.9 or more, it is possible to make brightness and gloss no higher than a certain level.

The average diameter (d) of the hair-like bodies is preferably 1-50 µm and more preferably 5-30 µm. By setting the average diameter of the hair-like bodies to 1 µm or more, a good tactile sensation can be ensured and by setting the average diameter of the hair-like bodies to 50 µm or less, a good tactile sensation such as moistness, softness, and fluffiness is obtained. The diameter at mid-height (h/2) of the hair-like bodies is measured, using an electron microscope and image processing software, at a number of locations on the resin sheet and an arithmetic mean value of the measurements is used as the average diameter of the hair-like bodies.

Moreover, the aspect ratio of the hair-like bodies can be represented as (average height of the hair-like bodies/average diameter of the hair-like bodies). The aspect ratio of the hair-like bodies is preferably 2-20, more preferably 2-10, and yet more preferably 2-5. By setting the aspect ratio to 2 or more, a good tactile sensation can be ensured and by setting the aspect ratio to 20 or less, not only is a good tactile sensation such as moistness, softness, and fluffiness obtained, but the risk of the height to length ratio of the hair-like bodies becoming no higher than a certain level can also be reduced.

Meanwhile, the average bottom surface diameter of the hair-like bodies can also serve as a reference for the aspect ratio. The average bottom surface diameter of the hair-like bodies is preferably 10-150 µm. The average bottom surface diameter of the hair-like bodies is a value obtained by measuring the spacing between neighboring hair-like bodies at a number of locations on the resin sheet and using the arithmetic mean value of the measurements. The aspect ratio, when the bottom surface diameter of the hair-like bodies serves as a reference therefor, is preferably 1.0-10, more preferably 1.0-5, and yet more preferably 1.0-2.5. By setting the aspect ratio to 1.0 or more, a good tactile sensation can be ensured and by setting the aspect ratio to 120 or less, not only is a good tactile sensation such as moistness, softness, and fluffiness obtained, but the risk of the height to length ratio of the hair-like bodies becoming no higher than a certain level can also be reduced.

The average spacing (t) between the hair-like bodies is preferably 20-200 µm and more preferably 40-150 µm. The spacing between the hair-like bodies means the distance from the center of the root of a hair-like body to the center of the root of a neighboring hair-like body. By setting the average spacing to 20 µm or more, a good tactile sensation is ensured and by setting the average spacing to 200 µm or less, a good tactile sensation such as moistness, softness, and fluffiness is obtained. The average spacing of the hair-like bodies is a value obtained by measuring the spacing between neighboring hair-like bodies at a number of locations on the resin sheet and using the arithmetic mean value of the measurements.

The shape of the hair-like bodies is not particularly limited and may be configured to extend hair-like in a direction away from the base layer in a shape in which the hair-like bodies gradually thin approaching the tip or in which a swelling is formed at the tip. In short, the hair-like bodies may have a shape in which the cross-sectional area gradually shrinks with increasing distance from the base layer and then once again increases when the shape terminates. Further, the shape of the tip part of the hair-like bodies may be bud-shaped or mushroom-shaped. Moreover, the hair-like bodies may have a portion positioned at the base end extending in a direction away from the base layer, a portion that extends from the portion positioned at the base end and is curved with a fixed curvature or a curvature that gradually changes, and furthermore, a portion that is wound in a helix shape or a spiral shape. In this case, the tip parts of the hair-like bodies may have a shape that is folded inward. By having such a shape, a better tactile sensation is expressed. Further, due to the bud-shaped or mushroom-shaped portion being hollow, a better tactile sensation is expressed. When forming a bud-shaped or mushroom-shaped portion at the hair-like tips, it is preferable that the ratio of the average diameter of the width of the bud shape or mushroom shape with respect to the average diameter of the hair-like bodies be 1.1 or more. The height of the bud shape or mushroom shape is preferably 7 µm or more. The average diameter of the hair-like bodies and the average diameter of the width and the height of the bud shape or mushroom shape are values obtained by using the arithmetic mean value of measurements made with a scanning electron microscope photograph. The hair-like bodies contain the same thermoplastic resin as the base layer, i.e. the same resins that can be used in the base layer can be used as the thermoplastic resin.

That the base layer and the hair-like bodies have at least partially a cross-linked structure means that the thermoplastic resin included in the base layer and the hair-like bodies forms at least partially a three-dimensional cross-linked structure (e.g., a three-dimensional net-like structure). In certain embodiments, at least some of the hair-like bodies are cross-linked bodies, and in other embodiments, the overall surface of the hair-like bodies is a cross-linked body, and in yet other embodiments, the entirety (from the boundary with the base layer to the tip part) of the hair-like bodies is a cross-linked body. Examples of a method for forming a cross-linked body include a method involving forming a resin sheet and then irradiating a surface thereof having hair-like bodies with an electron beam and a method involving adding an organic peroxide and heating and humidifying after or during molding of the resin sheet. Examples of resins in which an organic peroxide has been added include commercially available products such as "LINKLON" manufactured by Mitsubishi Chemical Corporation. In this embodiment, it is preferred that cross-linked bodies are formed by electron beam irradiation (electron beam cross-linked bodies).

### Resin Sheet

In one embodiment of the present invention, the thickness of the resin sheet refers to the sheet thickness combining the average height of the hair-like bodies and the average thickness of the base layer. The sheet thickness is preferably 50-1500 µm, more preferably 50-1050 µm, and yet more preferably 120-200 µm. By setting the thickness to 50 µm or more, a good tactile sensation can be sufficiently ensured and by setting the thickness to 1500 µm or less, manufacturing costs can be suppressed.

In the present embodiment, "tactile sensation" means the feeling and the texture of a surface of the resin sheet. A judgment is made regarding whether a resin sheet surface feels comfortable when touched, and when the surface is judged as feeling comfortable, a resin sheet having a good specific texture such as moistness, softness, or fluffiness is deemed to have a good tactile sensation. Moreover, besides being specified by a sensory evaluation of texture, etc., a good tactile sensation can also be specified by the previously discussed aspect ratio.

In the present embodiment, "surface quality" means the visual impression of a resin sheet surface. Here, if a resin sheet surface, upon viewing, gives, e.g., a sense of depth or a sense of luxury, the resin sheet surface is regarded as having a good surface quality, and brightness and glow are specified as factors that contribute to the sense of depth and the sense of luxury.

The surface having the hair-like bodies in a resin sheet of the present invention has an L* (brightness) value of 15 or less, and preferably 10 or less, in an L*a*b* color system based on color difference measurement (JIS Z 8729). Setting the L* value to 15 or less in the L*a*b* color system based on color difference measurement (JIS Z 8729) gives an increased sense of depth and a good surface quality.

Specular gloss is a parameter that represents the level of reflection of incident light. The lower this value is, the lower the gloss is, and a product with a lower gloss is judged as having a greater matte effect. 60-degree specular gloss is a parameter that indicates how much of the light, set at 100 and incident at an angle inclined at 60 degrees from a vertical direction, which is set as 0 degrees, to a resin sheet surface, is reflected onto a light-receiving portion (incident on a light-receiving portion) inclined at 60 degrees on a reflection side. The surface having the hair-like bodies in a resin sheet of the present invention has a 60-degree specular gloss (JIS Z 8741, G60) of 0.2% or less. Setting the 60-degree specular gloss to 0.2% or less gives an increased sense of luxury and a good surface quality.

### Second Embodiment

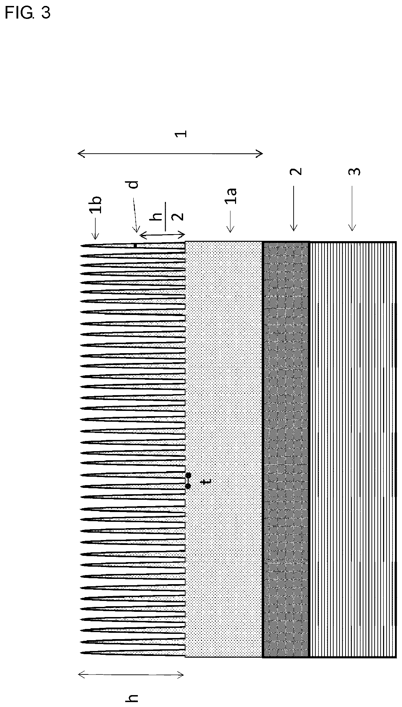

An example of the resin sheet according to a second embodiment of the present invention is a resin sheet in which a sealant resin layer (2) is formed between the base layer (1a) and a substrate layer (3), as shown in FIG. 3. That is, the layer configuration of the resin sheet according to the second embodiment is, from top to bottom, the hair-like bodies and the base layer (1), the sealant resin layer (2), and the substrate layer (3). Here, the hair-like bodies are the same as those explained in the first embodiment, so explanation thereof is omitted. However, the thickness of the hair-like bodies and the base layer represented by a total of the average height of the hair-like bodies and the average thickness of the base layer is preferably 115-900 µm. By setting the thickness to 150 µm or more, a good tactile sensation can be ensured and by setting the thickness to 900 µm or less, production costs can be suppressed.

### <Substrate Layer>

The substrate layer is preferably a thermoplastic resin such as a styrene-based resin, an olefin-based resin, a polyester-based resin, a nylon-based resin, an acrylic resin, or a thermoplastic elastomer. Further, when laminating, lamination may be performed by coextrusion molding and lamination by extrusion laminate molding or dry laminate molding using a nonoriented film or a biaxially oriented film.

Polyethylene terephthalate, polybutylene terephthalate, polyethylene-2,6-naphthalate, polymethylene terephthalate, a polyester resin in which, as copolymerization components, for example, a diol component such as diethylene glycol, neopentyl glycol, and polyalkylene glycol, a dicarboxylic acid component such as adipic acid, sebacic acid, phthalic acid, isophthalic acid, and 2,6-naphthalene dicarboxylic acid, etc. are copolymerized, etc. can be used as the polyester-based resin.

A lactam polymer such as caprolactam and laurolactam, an aminocarboxylic acid polymer such as 6-aminocaproic acid, 11-aminoundecanoic acid, and 12-aminododecanoic acid, a polycondensate of a diamine unit such as an aliphatic diamine such as hexamethylenediamine, decamethylenediamine, dodecamethylenediamine, and 2,2,4- or 2,4-4-trimethylhexamethylenediamine, an alicyclic diamine such as 1,3- or 1,4-bis(aminomethyl)cyclohexane or bis(p-aminocyclohexylmethane), or an aromatic diamine such as m- or p-xylylenediamine, and a dicarboxylic acid unit such as an aliphatic dicarboxylic acid such as adipic acid, suberic acid, and sebacic acid, an alicyclic dicarboxylic acid such as cyclohexanedicarboxylic acid, or an aromatic dicarboxylic acid such as terephthalic acid and isophthalic acid, and copolymers, etc. thereof can be used as the nylon-based resin. Examples thereof include nylon 6, nylon 9, nylon 11, nylon 12, nylon 66, nylon 610, nylon 611, nylon 612, nylon 6T, nylon 6I, nylon MXD6, nylon 6/66, nylon 6/610, nylon 6/6T, nylon 6I/6T, etc. and among these, nylon 6 and nylon MXD6 are suitable.

If the polymer is a vinyl polymer based on methacrylic acid ester monomers, it can be used as an acrylic resin and the structure, etc. thereof is not particularly limited. Examples of the methacrylic acid ester monomers include methyl methacrylate, ethyl methacrylate, propyl methacrylate, butyl methacrylate, pentyl methacrylate, hexyl methacrylate, etc. Further, the alkyl group such as a propyl group, butyl group, pentyl group, or hexyl group in the methacrylic acid ester monomer may be linear or may be branched. The methacrylic acid ester resin may be a homopolymer of a methacrylic acid ester monomer or a copolymer of multiple methacrylic acid ester monomers and may have monomer units derived from known vinyl compounds other than methacrylic acid ester such as ethylene, propylene, butadiene, styrene, α-methylstyrene, acrylonitrile, and acrylic acid.

The substrate layer may be alloyed with the abovementioned thermoplastic resins at any ratios so long as the effects of the present invention are not inhibited, as necessary. Furthermore, other additives may also be included. As the other additives, so long as the effects of the present invention are not inhibited, a colorant such as a pigment or a dye is used and further additives such as a water/oil repellent, a lubricating material/mold release agent such as silicone oil or an alkyl ester-based agent, a fibrous reinforcing agent such as glass fiber, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, an ultraviolet light absorber, a flame retardant, an anti-bacterial agent, an anti-viral agent, or a heat stabilizer can be added. Further, scrap resin generated in the resin sheet manufacturing process can be mixed and used.

Further, in the present embodiment, so long as the effects of the present invention are not inhibited, the substrate layer may have a partially cross-linked structure.

### <Sealant Resin Layer>

The sealant resin layer is for causing adhesion between the base layer and the substrate layer to be expressed and a modified olefin-based resin, a hydrogenated styrene-based thermoplastic elastomer, etc. can be used as resin components.

Olefin-based resins such as olefins with about 2-8 carbon atoms such as ethylene, propylene, and butene-1, copolymers of these olefins and other olefins with about 2-20 carbon atoms such as ethylene, propylene, butene-1,3-methylbutene-1, pentene-1,4-methylpentene-1, hexene-1, octene-1, and decene-1 or copolymers of these olefins and vinyl compounds such as vinyl acetate, vinyl chloride, acrylic acid, methacrylic acid, acrylic acid ester, methacrylic acid ester, and styrene, and olefin-based rubbers such as ethylene-propylene copolymers, ethylene-propylene-diene copolymers, ethylene-butene-1 copolymers, and propylene-butene-1 copolymers modified under graft reaction conditions with unsaturated carboxylic acids such as acrylic acid, methacrylic acid, crotonic acid, isocrotonic acid, maleic acid, fumaric acid, itaconic acid, citraconic acid, and tetrahydrophthalic acid or derivatives of the acids such as halides, amides, imides, anhydrides, and esters, specifically, malonyl chloride, maleimide, maleic anhydride, citraconic anhydride, monomethyl maleate, dimethyl maleate, and glycidyl maleate can be used as the modified olefin-based resin.

Among these, an "ethylene-propylene-diene copolymer" or ethylene-propylene or butene-1 copolymer rubber modified with an unsaturated dicarboxylic acid or an anhydride thereof, in particular maleic acid or an anhydride thereof, is suitable.

A hydrogenated copolymer of a styrene-based monomer and butadiene or isoprene, a hydrogenated styrene-butadiene-styrene block copolymer (styrene-ethylene/butylene-styrene block copolymer), a hydrogenated styrene-isoprene-styrene block copolymer (styrene-ethylene/propylene-styrene block copolymer), etc. can be used as the hydrogenated styrene-based thermoplastic elastomer and, in particular, a styrene-ethylene/butylene-styrene block copolymer is preferable.

The thickness of the sealant resin layer is preferably 20-90 µm and more preferably 40-80 µm. By setting the thickness to 20 µm or more, interlayer separation occurring between the base layer and the substrate layer can be suppressed and by setting the thickness to 90 µm or less, production costs can be suppressed.

The sealant resin layer may be alloyed with the abovementioned thermoplastic resins at any ratios so long as the effects of the present invention are not inhibited, as necessary. Furthermore, other additives may also be included. As the other additives, so long as the effects of the present invention are not inhibited, a colorant such as a pigment or a dye is used and further additives such as a water repellent, an oil repellent, a lubricating material/mold release agent such as silicone oil or an alkyl ester-based agent, a fibrous reinforcing agent such as glass fiber, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, an ultraviolet light absorber, a flame retardant, an anti-bacterial agent, an anti-viral agent, or a heat stabilizer can be added. Further, in the present embodiment, so long as the effects of the present invention are not inhibited, the sealant resin layer may have a partially cross-linked structure.

### Third Embodiment

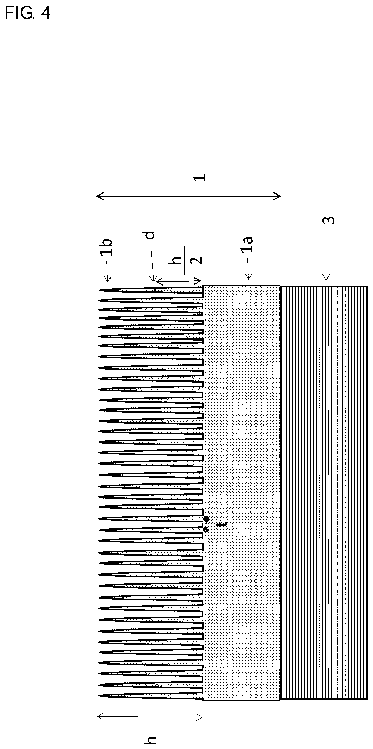

The resin sheet according to a third embodiment of the present invention is one in which hair-like bodies and the base layer (1) and the substrate layer (3) are directly laminated without using the sealant resin layer (2) indicated in the second embodiment, as shown in FIG. 4. That is, the layer configuration of the resin sheet according to the third embodiment is, from top to bottom, the hair-like bodies and the base layer (1)/the substrate layer (3) and is the layer configuration for the thermoplastic resin sheet according to the second embodiment from which the sealant resin layer has been removed. Here, the hair-like bodies and the base layer are the same as those in the first embodiment and the second embodiment, so explanation thereof is omitted. Meanwhile, the substrate layer (3) in the present embodiment is preferably a layer provided with sufficient adhesion with the base layer.

Further, in the resin sheet according to the third embodiment, it is preferred that a thermoplastic resin with excellent adhesion with the base layer is used as the substrate layer. For example, when the base layer is a urethane-based thermoplastic elastomer, an ABS resin can be used, when the base layer is a fluorine-based resin, an acrylic resin can be used, and when the base layer is an olefin-based resin, a hydrogenated styrene-based thermoplastic elastomer can also be used. When a styrene-based resin is used in combination with a hydrogenated styrene-based thermoplastic elastomer, it is preferred that the hydrogenated styrene-based thermoplastic elastomer is added at 5-10 parts by mass with respect to 90-95 parts by mass of the styrene-based resin. In this case, by setting the amount of the hydrogenated styrene-based thermoplastic elastomer added to 5 parts by mass or more, adhesion with the base layer becomes sufficient and the occurrence of interlayer separation can be suppressed, and by setting the amount added to 10 parts by mass or less, production costs can be suppressed.

In the same manner as the second embodiment, the substrate layer may be alloyed with the abovementioned thermoplastic resins at any ratios so long as the effects of the present invention are not inhibited. Furthermore, other additives may also be included. As the other additives, so long as the effects of the present invention are not inhibited, a colorant such as a pigment or a dye is used and further additives such as a water repellent, an oil repellent, a lubricating material/mold release agent such as silicone oil or an alkyl ester-based agent, a fibrous reinforcing agent such as glass fiber, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, an ultraviolet light absorber, a flame retardant, an anti-bacterial agent, an anti-viral agent, or a heat stabilizer can be added. Further, in the present embodiment, so long as the effects of the present invention are not inhibited, the substrate layer may have a partially cross-linked structure.

### Resin Sheet Manufacture

The method for manufacturing a resin sheet according to the present application is not limited and may be any method, but typically includes steps of melt-extruding a raw resin and adding regularly arranged hair-like bodies to at least one surface of the obtained extruded resin sheet.

In the manufacture of a single layer sheet or a multilayer sheet, any resin sheet molding method can be used. Examples include methods for melting and extruding raw resins using a single-screw extruder when the sheet is single layer and multiple single-screw extruders when the sheet is multilayer and obtaining a resin sheet with a T-die. When the sheet is multilayer, a feed block or a multi-manifold die can be used. Moreover, the layer configurations of the embodiments of the resin sheet of the present application are basically as discussed previously, but beyond these, for example, scrap raw material generated in a manufacturing process for the resin sheet or molded container of the present invention may be added to the substrate layer or laminated as a further layer so long as degradation of physical properties, etc. is not observed.

The method for adding the hair-like bodies is not particularly limited and any method known by a person skilled in the art can be used. Examples include a manufacturing method using an extrusion molding technique, a manufacturing method using a roll-to-roll technique, a manufacturing method using a photolithography technique, a manufacturing method using a hot pressing technique, a manufacturing method using a pattern roll and a UV curable resin, a manufacturing method using a 3D printer, a method for covalently bonding with a polymerization reaction after embedding the hair-like bodies in the resin layer, etc.

For example, when using an extrusion molding technique, the resin sheet according to the present invention can be manufactured by extruding a resin sheet with a T-die technique and casting with a transfer roll on which a relief process has been performed and a touch roll so as to add the shapes of hairlike bodies to a surface of the resin sheet.

A roll in which a micro-relief has been applied regularly on a surface thereof with a laser engraving or electrocasting method, an etching method, a mill engraving method, etc. can be used as the transfer roll on which a relief process has been performed. Here, regular means that the relief is in an arranged state that is not random, that is, is arranged in an orderly fashion in one direction or in two directions. The arrangement of the relief in an embodiment can be selected from a grid arrangement arranged vertically and horizontally, a staggered arrangement, etc. Examples of the shape of the relief part include, if the shape of a concavity, funnel-shapes (cone, quadrangular pyramid, triangular pyramid, hexagonal pyramid, etc.), semicircles, rectangles (quadrangular prism), etc. As the size thereof, the diameter of the opening of the concavity, the depth of the concavity, the spacing of the concavity shapes, etc. are from several micrometers to several hundreds of micrometers. The spacing of the hair-like bodies can be adjusted by adjusting the spacing of the concavities on the transfer roll and the height of the hair-like bodies can be adjusted by adjusting the depth of the concavities on the transfer roll, and the tactile sensation can also be adjusted thereby.

At least part of the transfer roll surface is ceramic sprayed and it is preferable that a relief process is performed on the ceramic-sprayed surface. Due to ceramic spraying, the processability of the relief is improved and the resin sheet can be stably released from the transfer roll.

Further, it is preferable that a relief process with a high aspect ratio be performed on the transfer roll surface. For example, the aspect ratio (concavity depth/concavity opening diameter) when processing concavity shapes into the transfer roll surface is preferably 1.0-9.0. In performing a high aspect ratio relief process on the transfer roll surface, in comparison with an etching method, a blasting method, a mill engraving method, etc., a laser engraving method or an electrocasting method is suitable when performing precision processing in the depth direction and thus is particularly suitably used.

For example, a metal, a ceramic, etc. can be used as the material of the transfer roll. Meanwhile, various materials can be used as the touch roll, for example, a roll made from silicone-based rubber, NBR-based rubber, EPT-based rubber, butyl rubber, chloroprene rubber, or fluorine rubber can be used. In certain embodiments, a touch roll with a rubber hardness (JIS K 6253) of 40-100 can be used. Further, a teflon layer may also be formed on the surface of the touch roll.

The resin sheet of the present embodiment can be manufactured by using a roll set of the above transfer roll and touch roll.

In a certain embodiment, a resin sheet of the present embodiment can be manufactured by adjusting the temperature of the transfer roll to a temperature near the crystal fusion temperature, the glass transition point, or the melting point of the thermoplastic resin (for example, 90-150°C when using a linear medium-density polypropylene) and casting with a pinch pressure between the transfer roll and the touch roll of 30-150 Kgf/cm. The cast resin sheet is taken in at a line speed of 0.5-30 m/min. using a pinch roll, etc.

Further, while the above embodiments are shown specifically, the present invention is not limited thereto.

### Molded Article

The molded product of the present invention is a molded product using the resin sheet of the present invention. The resin sheet of the present invention is compatible with molding in general and examples of molding methods include, other than insert molding and in-mold molding, general vacuum molding and pressure molding, and as applications thereof, a method of heating and softening a resin sheet in vacuum and overlaying on (molding to) a surface of an existing molded product by opening under atmospheric pressure, etc., but the molding method is not limited thereto. Further, publicly known sheet heating methods such as radiation heating with an infrared heater or the like, which is non-contact heating, can be adapted as a method to heat and soften a sheet before molding. In vacuum-pressure molding in certain embodiments, for example, a resin sheet is heated for 20-480 seconds at a surface temperature of at 60-220°C and then molded onto an existing molded product surface and can be stretched to 1.05-2.50 times depending on the surface shape.

### Product

The resin sheet to which the hair-like bodies according to the present invention have been added to a surface thereof can be applied to a use requiring the good tactile sensation indicated above. For example, the resin sheet of the present invention can be applied to interior materials of automobiles, electronic devices, electronic device cladding, cosmetic containers or container members, stationery members, lighting fixture members, and daily commodities members.

Examples of interior materials of automobiles include the portions of the automobile interior that hands touch such as the steering wheel, dashboard, levers, and switches. Examples include interior materials in which the abovementioned resin sheet is attached to a publicly known instrument panel or pillar. By attaching the resin sheet, an interior material imparted with a good tactile sensation can be achieved. As materials of the resin sheet to be attached, in consideration of weather resistance and chemical resistance, olefin-based resins, vinyl chloride-based resins, and urethane-based elastomers are preferable. The method for attaching the resin sheet and the interior material together is not particularly limited.

Examples of electronic device cladding include smartphone housings, smartphone cases, music player cases, game console housings, digital camera housings, electronic notebook housings, calculator housings, tablet housings, mobile computer housings, keyboards, mice, etc. For example, there are game machine components in which the resin sheet of the present invention is attached to a publicly known game machine substrate. By attaching the resin sheet, a game machine component imparted with a good tactile sensation can be achieved. As materials of the resin sheet to be attached, olefin-based resins and urethane-based elastomers are preferable. The method for attaching the resin sheet and the game machine component together is not particularly limited.

Examples of cosmetic container members include containers for face cream, pack cream, foundation, and eyeshadow and, for example, a cosmetic container in which the resin sheet of the present application has been attached to a lid member of a publicly known container for foundation can be raised. By attaching the resin sheet, a cosmetic container imparted with a good tactile sensation can be achieved. As materials of the resin sheet to be attached, olefin-based resins and urethane-based elastomers are preferable. The method for attaching the resin sheet is not particularly limited.

Examples of stationery members include book covers, notebook covers, pen case covers, etc. and, for example, a book cover imparted with a good tactile sensation and waterproofing could be configured by manufacturing a known book cover using the resin sheet of the present invention. As materials of the sheet, olefin-based resins and urethane-based elastomers are preferable. The method for manufacturing using the resin sheet is not particularly limited.

Examples of lighting equipment members include lighting equipment for indoors or in vehicles, and for example, a lighting device in which the resin sheet of the present invention has been attached to a cover member of a known LED lighting device can be raised. By attaching the resin sheet, an LED lighting device imparted with a good tactile sensation and light diffusibility can be achieved. As materials of the resin sheet to be attached, olefin-based resins and fluorine-based resins are preferable. The method for attaching the resin sheet is not particularly limited.

Examples of daily commodities members include restroom products, indoor mats, sheets for tables, etc., and for example, a toilet device in which the resin sheet of the present invention has been attached to a seat member of the toilet device can be raised. By attaching the resin sheet, a toilet device with a seat imparted with a good tactile sensation can be achieved. As materials of the resin sheet to be attached, olefin-based resins, vinyl chloride resins, and fluorine-based resins are preferable. The method for attaching the resin sheet is not particularly limited.

Furthermore, a hair-like body sheet in which words or a pattern are printed on the surface of the hair-like bodies with a general printing method (an offset printing method, a gravure printing method, a flexographic printing method, a screen printing method, foil stamping, etc.) can be manufactured and applied to the above use. The material of the resin sheet to be printed on is not particularly limited, but it is preferable that the printability with the ink used in printing be considered.

Further, a laminated body in which the resin sheet of the present invention is laminate molded (dry laminate molded or extrusion laminate molded) with a printed article on which words, a pattern, etc. are printed (such as paper or a metal thin film) or with a non-woven cloth, etc. can be manufactured, for example, a business card with a tactile sensation can be manufactured by laminate molding to the printing surface of the business card. The material of the resin sheet to be laminated is not particularly limited.

### EXAMPLES

The present invention shall be explained in more detail below using examples and comparative examples, but the present invention is not at all limited by the details of the examples, etc.

The raw materials used in the examples, etc. are as follows.
(1) Hair-like bodies and base layer
   - (A) Linear medium-density PE (C4) "Neozex 45200" (manufactured by Prime Polymer Co., Ltd.)
   - (B) TPU (urethane-based elastomer) "ET880: Polyether" (manufactured by BASF SE)
   - (C) Mold release agent "Waxmaster V" (manufactured by FCI Co., Ltd.)
(2) Substrate Layer
   - (D) ABS "GT-R-61A" (manufactured by Denka Company Limited)
(3) Colorant
   - (E-1) Colorant "Elastollan Master Color Black 590M50" (manufactured by FCI Co., Ltd.)
   - (E-2) Colorant "PE-M AZ 90086 (KE) 40 Black" (manufactured by Dainichiseika Color & Chemicals Mfg. Co., Ltd.)
   - (E-3) Colorant "AB-M 98H 845 Black" (manufactured by Dainichiseika Color & Chemicals Mfg. Co., Ltd.)

The evaluation methods for the various characteristics of the resin sheets and the molded products in which the resin sheets are vacuum molded manufactured in the examples and comparative examples are as follows.

### (1) Brightness and gloss evaluation

Measurements were made by reflectance in accordance with JIS Z8729 using "ZE-6000," a color difference meter for color measurement manufactured by NIPPON DENSHOKU INDUSTRIES Co., Ltd. Measurements were made at 10 arbitrary locations on a surface having hair-like bodies of a portion of a 500 mm-wide resin sheet, with 30 mm from the two end parts thereof excluded, and the arithmetic mean value of the measurements was used as the brightness.

Moreover, the 60-degree specular gloss (G60, incident angle 60°, acceptance angle 60°) defined by JIS Z 8741 was measured using "Micro-Gloss," a gloss checker manufactured by BYK. Measurements were made at 10 arbitrary locations on a surface having hair-like bodies of a portion of a 500 mm-wide resin sheet, with 30 mm from the two end parts thereof excluded, and the arithmetic mean value of the measurements was used as the gloss.

When the L* value was 20 or less and the 60-degree specular gloss was 1.5% or less, it was judged that there was a sense of depth and a sense of luxury, which contribute to a good surface quality.

### (2) Average height of hair-like bodies, average length of hair-like bodies, average diameter of hair-like bodies, average spacing of hair-like bodies, and average thickness of base layer

The height (h) of the hair-like bodies, the average length (L) of the hair-like bodies, the diameter (d) of the hair-like bodies, the spacing (t) of the hair-like bodies, and the thickness of the base layer of the resin sheet were measured using a laser microscope VK-X100 (manufactured by KEYENCE CORPORATION). The measured samples were cross-sectional slices cut from the resin sheets at three arbitrary locations with a microtome. The average height of the hair-like bodies was measured by measuring the height of 10 hair-like bodies of each sample and calculating the arithmetic mean value of the 30 measurements. For the average length of the hair-like bodies, the length of 10 hair-like bodies was measured for each sample, by plotting 11 points, from the tip to the center of the root of the hair-like bodies, at equal spacing with a multi-point measurement mode and using the total value of the 10 spaces when neighboring plots are connected by a line, and the arithmetic mean value of the 30 measurements was used as the average length of the hair-like bodies. The average diameter of the hair-like bodies was measured by measuring the diameter of 10 hair-like bodies of each sample at mid-height (h/2) and calculating the arithmetic mean value of the 30 measurements. The average spacing of the hair-like bodies was measured by measuring the distance from the center of the root of one hair-like body to the center of the root of a neighboring hair-like body at 10 locations of each sample and calculating the arithmetic mean value of the 30 measurements. The average thickness of the base layer was measured by measuring the thickness from the roots of the hair-like bodies to the other layer interface at 10 locations of each sample and calculating the arithmetic mean value of the 30 measurements.

### (3) Good tactile sensation sensory evaluation

A sensory evaluation of the good tactile sensation was performed by having a total of 30 people, 15 men and 15 women, touch the resin sheets. When touching the surfaces of the resin sheets, whether comfortableness was felt was judged with "o" and "×" and when judged with "o", the resin sheet was evaluated as having a specific texture such as moistness, softness, or fluffiness. When evaluated as having the same texture by no less than 80% of the evaluators, the resin sheet was deemed to have that texture. Moreover, whether the same texture was also maintained on the surface of the molded products which were vacuum molded using the resin sheets was evaluated.

### Examples 1 and 2, and Comparative Examples 2, 3, and 4

A dry blend of a thermoplastic resin (B), a mold release agent (C), and a colorant (E) was streamed from a 40 mm single-screw extruder, a dry blend of a thermoplastic resin (D) and a colorant (E) was streamed from a 65-mm single-screw extruder, and a resin sheet extruded with a T-die method was cast using a metal transfer roll on which a relief process had been performed with chromium oxide spraying and a laser engraving method and which was adjusted to 60-150°C and a silicone-based rubber touch roll having a rubber hardness of 70 which was adjusted to 10-90°C and taken in at a line speed of 2-15 m/min. using a pinch roll to obtain a 500 mm-wide two-layer resin sheet having, on one surface thereof, the nap shape shown in Table 1 and having the composition and the thickness shown in Table 1.

### Example 3 and Comparative Example 5

A dry blend of a thermoplastic resin (A) and a colorant (E) was streamed from a 65 mm single-screw extruder and a single-layer resin sheet extruded with a T-die method was cast using a metal transfer roll on which a relief process had been performed with chromium oxide spraying and a laser engraving method and which was adjusted to 60-150°C and a silicone-based rubber touch roll having a rubber hardness of 70 which was adjusted to 10-90°C and taken in at a line speed of 2-15 m/min. using a pinch roll to obtain a 500 mm-wide single-layer resin sheet having, on one surface thereof, the nap shape shown in Table 1 and having the composition and the thickness shown in Table 1.

### Comparative Example 1

Other than using, in place of the transfer roll, a roll on which a relief process had not been performed, a 500 mm-wide two-layer resin sheet with the composition and the thickness shown in Table 1 and in which both surfaces have a smooth shape was obtained in the same way as Example 1.

Evaluative testing of various characteristics was performed using the resin sheets obtained in the examples and comparative examples and the results are shown in Table 1.

**Table 1**

| | | Hair-like Bodies and Base Layer | | | | | Substrate Layer | | Nap Shape | | | | | | 60° Specular Gloss (%) | Good Tactile Sensation (Texture) | |
|---|---|---|---|---|---|---|---|---|---|---|---|---|---|---|---|---|---|
| | | LLDPE (A) | TPU (B) | Mold Release Agent (C) | Colorant (E-1) | Colorant (E-2) | ABS (D) | Colorant (E-3) | Average Height, H (*µ*m) | Average Length, L (*µ*m) | Average Diameter, d (*µ*m) | Average Spacing, t (*µ*m) | Height to Length Ratio H/L | Color Difference L* Value | | | |
| Example 1 | Composition (mass%) | - | 95 | 5 | 1 | - | 100 | 1 | 102 | 105 | | 64 | 0.98 | 9.8 | 0.1 | ○ | moist |
| | Thickness (*µ*m) | | | 67 | | | 351 | | | | | | | | | | |
| Example 2 | Composition (mass%) | - | 95 | 5 | 1 | - | 100 | 1 | 42 | 43 | 20 | 41 | 0.98 | 10 | 0.1 | ○ | dry |
| | Thickness (*µ*m) | | | 51 | | | 362 | | | | | | | | | | |
| Example 3 | Composition (mass%) | 100 | - | - | - | 1 | | | 169 | 174 | 26 | 62 | 0.97 | 11 | 0.1 | ○ | dry |
| | Thickness (*µ*m) | | | 160 | | | | | | | | | | | | | |
| Comparative Example 1 | Composition (mass%) | - | 95 | 5 | 1 | - | 100 | 1 | 0 | 0 | | | | 8.4 | 84.2 | × | smooth |
| | Thickness (*µ*m) | | | 53 | | | 356 | | | | | | | | | | |
| Comparative Example 2 | Composition (mass%) | - | 95 | 5 | 1 | - | 100 | 1 | 24 | 24 | 32 | 61 | 1 | 8.8 | 2. 5 | × | smooth |
| | Thickness (*µ*m) | | | 53 | | | 356 | | | | | | | | | | |
| Comparative Example 3 | Composition (mass%) | - | 95 | 5 | - | - | 100 | - | 127 | 130 | 31 | 63 | 0.98 | 54 | 1.2 | ○ | moist |
| | Thickness (*µ*m) | 51 | | | | | 362 | | | | | | | | | | |
| Comparative Example 4 | Composition (mass%) | - | 95 | 5 | 1 | - | 100 | 1 | 164 | 215 | 38 | 62 | 0.76 | 27 | 0.6 | ○ | moist |
| | Thickness (*µ*m) | 64 | | | | | 335 | | | | | | | | | | |
| Comparative Example 5 | Composition (mass%) | 100 | - | - | - | 1 | | | 286 | 325 | 18 | 63 | 0.88 | 23 | 0.3 | O | dry |
| | Thickness (*µ*m) | 299 | | | | | | | | | | | | | | | |

The following is clear from the results shown in Table 1.

With respect to good tactile sensation, results satisfying the evaluation standards were obtained with the resin sheets of Examples 1-3 and Comparative Examples 3-5. In contrast, results satisfying the evaluation standards pertaining to good tactile sensation were not obtained with the resin sheets of Comparative Examples 1 and 2. With respect to surface quality, results satisfying the evaluation standards were obtained with the resin sheets of Examples 1-3. In contrast, either or both brightness and glow became no less than a certain level and results satisfying the evaluation standards pertaining to good surface quality were not obtained with the resin sheets of Comparative Examples 1-5.

The present invention was explained above using various embodiments, but it need not be mentioned that the technical scope of the present invention is not limited to the scope described in the above embodiments. It is clear to a person skilled in the art that it is possible to add various modifications or improvements to the above embodiments. Further, it is clear from the recitations of the patent claims that aspects in which such modifications or improvements are added are included in the technical scope of the present invention as defined by the claims.

### REFERENCE SIGNS LIST

- 1: Hair-like bodies and base layer
- 1a: Base layer
- 1b: Hair-like bodies
- d: Diameter of the hair-like bodies
- h: Height of the hair-like bodies
- t: Spacing of the hair-like bodies
- 2: Sealant resin layer
- 3: Substrate layer

## Claims

1. A thermoplastic resin sheet having hair-like bodies (1b) arranged regularly on at least one surface of a base layer (1a), a continuous phase being formed without a structural boundary between the base layer (1a) and the hair-like bodies (1b), wherein the hair-like bodies (1b) have an average height (h) of 30 µm or more and 200 µm or less, the surface having the hair-like bodies (1b) has an L* value of 15 or less in an L*a*b* color system based on color difference measurement (JIS Z 8729), and the surface having the hairlike bodies has a 60-degree specular gloss (JIS Z 8741) of 0.2% or less, wherein
the hair-like bodies (1b) have an average height (h) to average length ratio of 0.9 or more and 1.0 or less, and
the base layer and the hair-like bodies contain the same resin composition having a thermoplastic resin as a main component, and the resin composition includes a colorant,
**characterized in that** the resin sheet has a dark color in which the brightness is 80% or less in the HSV model.

2. The resin sheet according to claim 1, wherein the hair-like bodies (1b) have an average diameter (d) of 1 µm or more and 50 µm or less and the hair-like bodies (1b) have an average spacing (t) of 20 µm or more and 200 µm or less.

3. The resin sheet according to claim 1 or 2, wherein the thermoplastic resin comprises an olefin-based resin.

4. The resin sheet according to claim 1 or 2, wherein the thermoplastic resin comprises a urethane-based elastomer.

5. The resin sheet according to any one of claims 1 to 4, wherein the resin sheet is a multilayer resin sheet.

6. A molded article formed using the resin sheet according to any one of claims 1 to 5.

7. The molded article according to claim 6, wherein the molded article is vacuum-pressure molded on a surface of an automobile interior member, an electronic device, an electronic device cladding, a cosmetic container, or a container member.

## Patentansprüche

1. Thermoplastische Harzfolie mit haarähnlichen Körpern (1b), die regelmäßig auf mindestens einer Oberfläche einer Basisschicht (1a) angeordnet sind, wobei eine kontinuierliche Phase ohne eine strukturelle Grenze zwischen der Basisschicht (1a) und den haarähnlichen Körpern (1b) gebildet wird, wobei die haarähnlichen Körper (1b) eine durchschnittliche Höhe (h) von 30 µm oder mehr und 200 µm oder weniger aufweisen, die Oberfläche mit den haarähnlichen Körpern (1b) einen L*-Wert von 15 oder weniger in einem L*a*b*-Farbsystem auf der Grundlage einer Farbdifferenzmessung (JIS Z 8729) aufweist, und die Oberfläche mit den haarähnlichen Körpern einen 60-Grad-Spiegelglanz (JIS Z 8741) von 0,2% oder weniger aufweist, wobei
die haarähnlichen Körper (1b) ein durchschnittliches Verhältnis von Höhe (h) zu durchschnittlicher Länge von 0,9 oder mehr und 1,0 oder weniger aufweisen und
die Basisschicht und die haarähnlichen Körper die gleiche Harzzusammensetzung mit einem thermoplastischen Harz als Hauptkomponente enthalten und die Harzzusammensetzung ein Farbmittel enthält,
**dadurch gekennzeichnet, dass** die Harzfolie eine dunkle Farbe hat, deren Helligkeit im HSV-Modell 80 % oder weniger beträgt.

2. Harzfolie nach Anspruch 1, wobei die haarähnlichen Körper (1b) einen durchschnittlichen Durchmesser (d) von 1 µm oder mehr und 50 µm oder weniger haben und die haarähnlichen Körper (1b) einen durchschnittlichen Abstand (t) von 20 µm oder mehr und 200 µm oder weniger haben.

3. Harzfolie nach Anspruch 1 oder 2, wobei das thermoplastische Harz ein Harz auf Olefinbasis umfasst.

4. Harzfolie nach Anspruch 1 oder 2, wobei das thermoplastische Harz ein Elastomer auf Urethanbasis umfasst.

5. Harzfolie nach einem der Ansprüche 1 bis 4, wobei die Harzfolie eine mehrschichtige Harzfolie ist.

6. Geformter Gegenstand, der unter Verwendung der Harzfolie nach einem der Ansprüche 1 bis 5 hergestellt ist.

7. Geformter Gegenstand nach Anspruch 6, wobei der geformte Gegenstand unter Vakuumdruck auf eine Oberfläche eines Kraftfahrzeug-Innenteils, einer elektronischen Vorrichtung, einer Verkleidung einer elektronischen Vorrichtung, eines Kosmetikbehälters oder eines Behälterteils geformt ist.

## Revendications

1. Feuille de résine thermoplastique comportant des corps semblables à des cheveux (1b) disposés régulièrement sur au moins une surface d'une couche de base (1a), une phase continue étant formée sans limite structurelle entre la couche de base (1a) et les corps semblables à des cheveux (1b), dans laquelle les corps semblables à des cheveux (1b) ont une hauteur moyenne (h) de 30 µm ou plus et de 200 µm ou moins, la surface comportant les corps semblables à des cheveux (1b) a une valeur L* de 15 ou moins dans un système de couleur L*a*b* basé sur la mesure de la différence de couleur (JIS Z 8729), et la surface comportant les corps semblables à des cheveux a une brillance spéculaire à 60 degrés (JIS Z 8741) de 0,2 % ou moins, dans lequel
les corps semblables à des cheveux (1b) ont un rapport hauteur moyenne (h)/longueur moyenne de 0,9 ou plus et de 1,0 ou moins, et
la couche de base et les corps semblables à des cheveux contiennent la même composition de résine ayant une résine thermoplastique comme composant principal, et la composition de résine comprend un colorant,
**caractérisée par le fait que** la feuille de résine a une couleur foncée dont la luminosité est de 80 % ou moins dans le modèle HSV.

2. Feuille de résine selon la revendication 1, dans laquelle les corps semblables à des cheveux (1b) ont un diamètre moyen (d) de 1 µm ou plus et de 50 µm ou moins et les corps semblables à des cheveux (1b) ont un espacement moyen (t) de 20 µm ou plus et de 200 µm ou moins.

3. Feuille de résine selon la revendication 1 ou 2, dans laquelle la résine thermoplastique comprend une résine à base d'oléfine.

4. Feuille de résine selon la revendication 1 ou 2, dans laquelle la résine thermoplastique comprend un élastomère à base d'uréthane.

5. Feuille de résine selon l'une des revendications 1 à 4, dans laquelle la feuille de résine est une feuille de résine multicouche.

6. Article moulé formé à l'aide de la feuille de résine selon l'une quelconque des revendications 1 à 5.

7. Article moulé selon la revendication 6, dans lequel l'article moulé est moulé sous vide et sous pression sur une surface d'un élément intérieur d'automobile, d'un appareil électronique, d'un revêtement d'appareil électronique, d'un récipient cosmétique ou d'un élément de récipient.
